# FASCICULE DE BREVET EUROPEEN

(11) **EP 3 233 428 B1**
(45) Date de publication et mention de la délivrance du brevet: **29.08.2018**
(21) Numéro de dépôt: 15822976.5
(22) Date de dépôt: 16.12.2015
(51) Int. Cl.: B29C 64/153, B33Y 70/00, B33Y 10/00

(54) **PROCÉDÉ DE FABRICATION D'UN OBJET PAR FUSION D'UNE POUDRE DE POLYMÈRE DANS UN DISPOSITIF DE FRITTAGE DE POUDRE**
VERFAHREN ZUR HERSTELLUNG EINES GEGENSTANDES DURCH SCHMELZEN EINES POLYMERPULVERS IN EINER PULVERSINTERVORRICHTUNG
METHOD FOR PRODUCING AN OBJECT BY MELTING A POLYMER POWDER IN A POWDER SINTERING DEVICE

(30) Priorité: 16.12.2014 FR 1462502
(43) Date de publication de la demande: 25.10.2017
(73) Titulaire: Arkema France, 92700 Colombes (FR)
(72) Inventeur: BRULE, Benoît, 27170 Beaumont-le-Roger (FR); DECRAEMER, Nadine, 27170 Beaumontel (FR)
(86) Numéro de dépôt international: PCT/FR2015/053540
(87) Numéro de publication internationale: WO 2016/097600

(56) Documents cités:
- WO-A1-2013/068686
- WO-A1-2015/092272
- Robert-Stirling-Ring: "Material data sheet EOS GmbH -Electro Optical Systems PA2200", , 1 décembre 2008 (2008-12-01), XP055217772, Extrait de l'Internet: URL:https://www.shapeways.com/rrstatic/mat erial_docs/mds-strongflex.pdf [extrait le 2015-10-01]

## Description

Procédé de fabrication d'un objet par fusion d'une poudre de polymère dans un dispositif de frittage de poudre.

La présente invention concerne un procédé de fabrication d'un objet par fusion d'une poudre de polymère dans un dispositif de frittage de poudre sous un faisceau laser mettant en oeuvre une analyse rhéologique des polymères, afin de garantir les conditions de fabrication d'objet par fusion de poudres de polymères. Elle n'est pas limitée à des polymères particuliers et concerne donc tout type de polymères utilisables dans la fabrication d'objet par fusion de poudres de polymère dans un dispositif de frittage de poudre sous un faisceau laser.

La technologie de frittage de poudres sous un faisceau laser sert à fabriquer des objets en trois dimensions tels que des prototypes, des modèles, mais aussi des pièces fonctionnelles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

On dépose une fine couche de poudre du polymère considéré sur une plaque horizontale maintenue dans une enceinte chauffée à une certaine température. Le laser apporte l'énergie nécessaire pour fusionner les particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre. Cette couche de poudre est à une température appelée dans la suite température du lit de poudre (ou température du lit). Le laser apporte l'énergie nécessaire à fusionner les particules de poudre selon une géométrie correspondant à cette nouvelle tranche de l'objet et ainsi de suite. La procédure est répétée jusqu'à ce que l'on ait fabriqué tout l'objet. Outre la fusion des particules de poudre induite par l'énergie apportée par le laser, il est nécessaire d'utiliser des conditions qui permettent la coalescence des particules entre elles et une bonne adhésion/coalescence des couches entre elles de telle sorte que les propriétés mécaniques des objets fabriqués soient maximisées. Un paramètre déterminant dans l'obtention de pièces aux propriétés optimales est la température du lit de poudre. Le document WO-A-9607881 décrit un procédé selon le préambule de la revendication 1. Jusqu'à maintenant, la recherche de la température optimale du lit de poudre pour un polymère donné utilisé en frittage laser passe par des essais de frittage puis par une analyse des pièces obtenues (densité, porosité, propriétés mécaniques...). L'analyse des pièces permet de dégager les meilleurs paramètres expérimentaux et des pistes d'amélioration pour les futurs essais visant à déterminer les paramètres optimaux. Il est donc nécessaire de faire plusieurs essais en condition réelle de production d'objet (à différentes températures du lit de poudre en particulier) afin de déterminer les conditions autorisant la fabrication de pièces avec des propriétés maximisées. Ceci prend du temps et est couteux tant sur le plan d'occupation machine, opérateur, ou encore sur la consommation de poudre de polymère.

La méthodologie utilisée dans le procédé objet de la présente invention permet d'appréhender le comportement du matériau dans les conditions du procédé de fusion des poudres de polymère et de sélectionner, pour un matériau donné, les conditions de procédé (en particulier la température du lit de poudre) pour assurer une coalescence des particules entre elles et entre les couches successives.

Il est bien connu de l'homme de métier que la fenêtre de transformation (gamme de température du lit de poudre) est comprise entre la température de cristallisation (Tc) et la température de fusion (Tf) du polymère considéré dans le cas des polymères semi-cristallins. Dans le cas des polymères amorphes, la fenêtre de transformation se situe au dessus de la température de transition vitreuse (Tg) telle que mesurée par analyse thermique différentielle (DSC).

Dans le cas des polymères semi-cristallins, si la température du lit de poudre est trop proche de Tf, alors il y a agglomération de la poudre (« caking ») en dehors de la zone constituant l'objet d'où une perte de matière. Par ailleurs, le polymère fondu risque d'être trop fluide et peut s'écouler au delà de la première couche en formation ou au delà des contours.

Si la température du lit de poudre est trop proche de Tc, alors il y a déformation de la pièce (« curling »), en raison de la cristallisation trop rapide des couches successives du matériau.

Dans le cas des polymères amorphes, la température du lit de poudre doit être supérieure à la Tg. Dans ce cas, l'absence de cristallisation permet d'une part d'éviter la déformation des pièces et, d'autre part, de limiter le phénomène de retrait des pièces durant la phase de refroidissement.

Si la température du lit de poudre est trop éloignée au dessus de la Tg, il y a agglomération de la poudre (« caking »), en dehors de la zone constituant l'objet d'où une perte de matière. Par ailleurs, le polymère fondu risque d'être trop fluide et peut s'écouler au delà de la première couche en formation ou au delà des contours.

En dehors d'une plage de température particulière du lit de poudre de polymère, la qualité de la pièce obtenue n'est pas correcte.

Les études DSC permettent donc de fixer une gamme de température (entre Tc et Tf pour les semi cristallins et au dessus de Tg pour les amorphes) dans laquelle il faut ensuite choisir, par des essais successifs en machine et par une analyse des pièces obtenues, la température appropriée du lit de poudre. En plus de ne fournir qu'une gamme de température, ces essais DSC ne tiennent que très partiellement compte des spécificités des produits, par exemple de leur masse moléculaire.

Dans ce procédé de frittage laser, la partie du lit de poudre concernée par la couche en cours de frittage, après fusion par le laser, revient rapidement à la température du lit de poudre. C'est donc cette température qui contrôle la viscosité du matériau fondu, paramètre clé qui conditionne la coalescence des particules entre elles et entre les couches successives. En outre, cette viscosité adaptée doit perdurer un certain temps pour obtenir une coalescence des particules entre elles et entre les couches successives. Ce temps est défini comme « le temps ouvert ». En effet, dans le cas des polymères semi-cristallins, le refroidissement induit une cristallisation qui entraîne une augmentation de la viscosité et au-delà d'une certaine valeur de viscosité, les couches successives ne pourront plus coalescer (car la viscosité trop élevée deviendra un frein à la coalescence).

La demanderesse a constaté que les conditions autorisant une bonne adhésion et une bonne coalescence entre les particules de poudre d'une part, et entre les couches de poudres coalescées d'autre part, peuvent être appréhendées avec l'aide d'une analyse rhéologique. Cette analyse permet d'établir avec précision la condition idéale de plage de température du lit de poudre permettant de préparer des objets par fusion de poudres de polymère et en particulier le frittage laser des polymères. Elle permet donc d'établir la plage de température à partir de la viscosité de la couche fusionnée et du temps ouvert autorisant une bonne coalescence des particules entre elles et entre les couches successives.

### Résumé de l'invention :

L'invention concerne un procédé de fabrication d'un objet par fusion d'une poudre de polymère dans un dispositif de frittage de poudre sous un faisceau laser comprenant les étapes suivantes :
- Fabrication de l'objet dans un dispositif de frittage de poudre sous un faisceau laser à la température initiale du lit de poudre, la dite température initiale du lit de poudre étant sélectionnée de la façon suivante :
- Etablissement des comportements de viscosité de la poudre de polymère en fonction du temps et d'un gradient descendant de température à partir d'une température de surfusion, correspondant à la température du lit de poudre, que la couche fusionnée à T>Tf par le laser rejoint rapidement par refroidissement, les mesures de viscosité étant réalisées dans un dispositif rhéométrique plan-plan selon une fréquence de sollicitation inférieure à 5rad/s.
- Sélection de la température initiale correspondant à la température du lit de poudre autorisant une viscosité du polymère en surfusion comprise entre 800 et 20000 Pa.s durant une plage de temps supérieure à 5 minutes.

### Description Détaillée :

Le procédé de la divulgation s'applique à toute poudre de polymère thermoplastique destiné au procédé de frittage laser.

De telles poudres sont usuellement caractérisées par :
- un Dv50 autour de 50 microns, ou plus précisément entre 40 et 60 microns.

Le Dv50 appelé ici est le diamètre médian en volume qui correspond à la valeur de la taille de particule qui divise la population de particules examinée exactement en deux. Le Dv50 est mesuré selon la norme ISO 9276 - parties 1 à 6. Dans la présente description, on utilise un granulomètre Malvern Mastersizer 2000, et la mesure est faite en voie liquide par diffraction laser sur la poudre.
- une coulabilité suffisante pour permettre une mise en couche en machine, ce qui se traduit une certaine sphéricité des particules de poudre.

Tout type de polymère thermoplastique est concerné par le procédé objet de la divulgation. Il peut s'agir de polyoléfines (PE, PP), de polyvinyliques (PVC, PVDC), de styrèniques (PS), de poly acrylonitrile butadiène styrène (ABS), de polybutylène téréphtalate (PBT), de poly-éthylène téréphtalate (PET), de polycarbonate (PC), de copolymère éthylène-acétate de vinyle (EVA, EVM), de copolymère éthylène-alcool vinylique (EVOH), de polyamides ou copolyamides aliphatiques ou aromatiques (PA 6-6, PA 6, PA 11, PA 12, PA 4-6, PA 6-10, PA 6-12), de polyether-bloc amides (PEBA), de polyamide-imide (PAI), de poly (meth) acryliques (PMMA), de poly méthyl méthacrylate butadiène styrène (MBS), de polyacrylonitrile (PAN), de poly aryle éther cétones (PEK, PEEK, PEKK, PEKEKK,..) de polyimides (PI), de polymères fluorés (PTFE, PVDF), de polyether aromatiques (PPO), de poly acide lactique (PLA), de silicones, d'élastomères thermoplastiques pris seuls ou en mélanges. On ne saurait exclure d'autres polymères ou copolymères, qu'ils soient statistiques, à gradient ou à blocs.

Les polymères pourront être additivés de stabilisant (thermiques, UV), de charges conductrices (en particulier de fibres de carbone, nanotubes de carbone, noir de carbone), de charges renforçantes (fibres de carbone, fibres de verre, billes ou tout autre charge inorganique), de fibres broyées de longueur inférieure à 300µm et de préférence inférieure à 100 µm.

De préférence, il s'agit de polyamides ou de poly aryle éther cétones, plus particulièrement de PA 11, PA12, PEK, PEEK, PEKK.

Le procédé de fabrication d'objet par fusion - coalescence de poudres de polymères, et en particulier le frittage laser, nécessite des conditions particulières de viscosité de la couche frittée.

En effet, pour la fabrication d'objet avec un maximum de performance, en particulier pour les propriétés mécaniques, la viscosité ne doit être ni trop faible, ni trop forte. En outre cette viscosité optimale doit perdurer le temps nécessaire à une bonne coalescence des poudres.

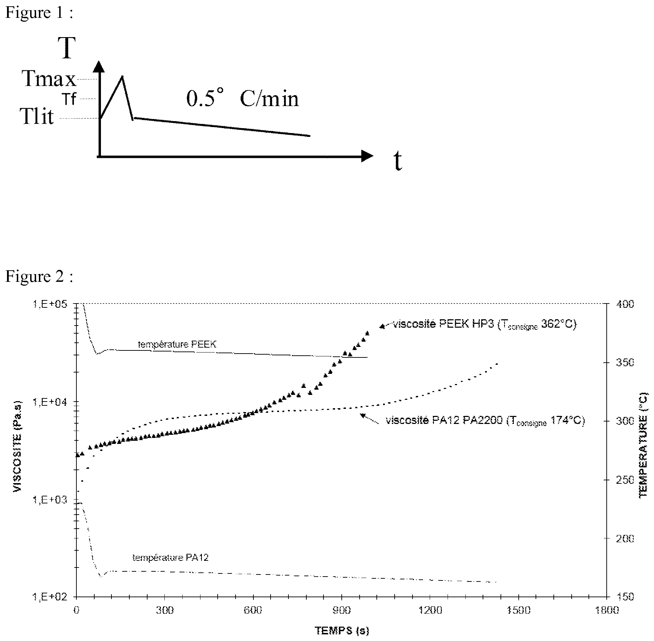

Dans ce procédé de frittage laser, la poudre avant frittage laser est à la température du lit de poudre (notée Tlit). Ensuite, le laser apporte l'énergie nécessaire à la fusion de la poudre qui monte donc rapidement à une température supérieure à sa Tf (cas des polymères semi-cristallins, température notée Tmax). Puis, la poudre frittée revient rapidement à Tlit et subit ensuite un refroidissement lent (refroidissement compris entre 0.1°C/min et 1°C/min). Nous avons choisi dans la suite de fixer la vitesse de refroidissement à 0.5°C/min. En résumé, le cycle thermique vu par le lit de poudre peut donc être résumé en fonction du temps par le schéma visible en figure 1.

Lors de ce cycle thermique, les phases de coalescence de la poudre et des couches entre elles interviennent lors des phases de refroidissement après Tmax (d'abord la phase de très courte durée de Tmax à Tlit puis une phase plus longue durant le refroidissement lent à partir de Tlit).

A l'issue de nombreux essais en conditions réelles dans un dispositif de frittage laser, et en reproduisant ces conditions dans un rhéomètre plan-plan, la demanderesse à constatée que cette viscosité devait être comprise entre 800 et 20000 Pa.s, et de préférence entre 1000 et 10000 Pa.s. Durant tout le temps nécessaire à la bonne coalescence des poudres, cette viscosité doit perdurer entre 800 et 20000 Pa.s et, de préférence, entre 1000 et 10000 Pa.s. Ce temps dit « temps ouvert » doit être supérieur à 5 minutes, de préférence supérieur à 10 minutes.

La présente demande décrit également les compositions comprenant un polymère semi-cristallin présentant une viscosité comprise entre 800 et 20000 Pa.s, et de préférence entre 1000 et 10000 Pa.s durant un temps supérieur à 5 minutes et de préférence supérieur à 10 min, les mesures de viscosité étant réalisées dans un dispositif rhéométrique plan-plan selon une fréquence de sollicitation inférieure à 5rad/s, la dite composition étant en surfusion à une température T inférieure à la température de fusion après une exposition à une température T max au-dessus de son point de fusion et utilisable dans un dispositif de fabrication d'objets par fusion de poudres de polymère et en particulier le frittage laser des polymères.

Tout type de polymère thermoplastique est concerné par les compositions. Il peut s'agir de polyoléfines (PE, PP), de polyvinyliques (PVC, PVDC), de styrèniques (PS), de poly acrylonitrile butadiène styrène (ABS), de polybutylène téréphtalate (PBT), de poly-éthylène téréphtalate (PET), de polycarbonate (PC), de copolymère éthylène-acétate de vinyle (EVA, EVM), de copolymère éthylène-alcool vinylique (EVOH), de polymamides ou copolymamides aliphatiques ou aromatiques (PA 6-6, PA 6, PA 11, PA 12, PA 4-6, PA 6-10, PA 6-12), de polyether-bloc amides (PEBA), de polyamide-imide (PAI), de poly (meth) acryliques (PMMA), de poly méthyl méthacrylate butadiène styrène (MBS), de polyacrylonitrile (PAN), de poly aryle éther cétones (PEK, PEEK, PEKK, PEKEKK,..)de polyimides (PI), de polymères fluorés (PTFE, PVDF), de polyether aromatiques (PPO), de poly acide lactique (PLA), de silicones, d'élastomères thermoplastiques pris seuls ou en mélanges. On ne saurait exclure d'autres polymères ou copolymères, qu'ils soient statistiques, à gradient ou à blocs.

Les polymères pourront être additivés de stabilisant (thermiques, UV), de charges conductrices (en particulier de fibres de carbone, nanotubes de carbone, noir de carbone), de charges renforçantes (fibres de carbone, fibres de verre, billes ou tout autre charge inorganique), de fibres broyées de longueur inférieure à 300µm et de préférence inférieure à 100 µm.

Les compositions préférées sont les polyamides ou les poly aryle éther cétones, plus particulièrement le PA 11, le PA12, le PEK, le PEEK, ou encore le PEKK.

Les rhéomètres utilisables sont des rhéomètres de type plan-plan ou cône-plan, c'est à dire des rhéomètres permettant de mesurer des viscosités élevées (typiquement des polymères thermoplastiques enchevêtrés) à des fréquences faibles, typiquement inférieures à 5 rad/sec.

### Exemple 1 :

Les courbes en figure 2 fournissent les cycles thermiques vus par les poudres PEEK et PA12 lors du cycle de refroidissement, donc lors du cycle devant permettre la coalescence des poudres et des couches entre elles ainsi que la viscosité des deux polymères.

Cas du PEEK HP3 (PEEK disponible chez la société EOS) Le cycle est le suivant : Tmax=400°C puis Tlit de 362°C comme appliqué dans une machine de frittage.

Cas du PA12 PA 2200 (PA12 disponible chez la société EOS). Le cycle est le suivant : Tmax=230°C puis Tlit de 174°C comme appliqué dans une machine de frittage.

Les mesures sont effectuées dans un rhéomètre ARES (de Rheometric Scientific), à une fréquence de sollicitation de 1 rad/s entre des plans parallèles (diamètre 25 mm) et avec une vitesse de refroidissement de 0.5°C/min.

La courbe de viscosité montre que dans les conditions expérimentales (Tlit) de frittage de ces 2 matériaux, ces 2 matériaux possèdent une viscosité du même ordre de grandeur et inférieure à 10000 Pa.s pendant 10 minutes. Cette gamme de viscosité et le temps ouvert (au moins 10 minutes ici) permet la coalescence de la poudre et des couches entre elles. Pour de telles températures de lit, les propriétés mécaniques des pièces sont optimales.

### Exemple 2 :

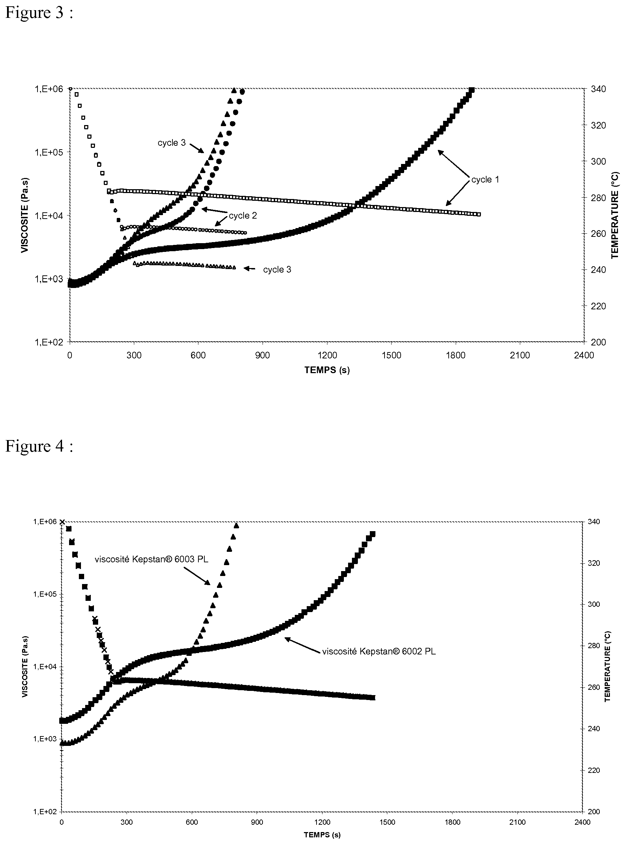

Les courbes en figure 3 fournissent les cycles thermiques à trois températures de lit différentes vues par la poudre PEKK lors du cycle de refroidissement, donc lors des cycles devant permettre la coalescence des poudres et des couches entre elles ainsi que les viscosités respectives des polymères.

Une poudre PEKK, Kepstan® 6003 de la société Arkema dont la taille de particule présente un dv50 de 50µm plus ou moins 5µm (notée Kepstan 6003 PL) est soumise à un test rhéologique selon 3 cycles de température (3 températures de lit différentes).

Cycle 1 : Tmax=340°C puis Tlit de 285°C (carré vide pour la température, carré plein pour la viscosité).

Cycle 2 : Tmax=340°C puis Tlit de 265°C (rond vide pour la température, rond plein pour la viscosité).

Cycle 3 : Tmax=340°C puis Tlit de 245°C (triangle vide pour la température, triangle plein pour la viscosité).

Les mesures sont effectuées dans un rhéomètre ARES, à une fréquence de sollicitation de 1 rad/s entre des plans parallèles (diamètre 25 mm) et avec une vitesse de refroidissement de 0.5°C/min.

On remarque que la viscosité et le temps ouvert sont fortement influencés par la température du lit de poudre. Pour ce grade, la température de lit optimale pour assurer la coalescence de la poudre et des couches entre elles est comprise entre 265°C et 285°C (entre le cycle 1 et le cycle 2) pour avoir une viscosité inférieure à 10 000Pa.s pendant un temps ouvert supérieur à 10 minutes.

Un essai en machine à une température de lit de 240°C a montré que les couches successives n'avaient pas coalescé en raison de leurs viscosités trop élevées.

A contrario, un essai en machine à une température de lit de 300°C a montré que la couche fusionnée s'effondrait à travers le lit de poudre.

### Exemple 3:

Les courbes en figure 4 fournissent le cycle thermique vu par deux poudres PEKK de masses moléculaires différentes lors du cycle de refroidissement, donc lors du cycle devant permettre la coalescence de la poudre et des couches entre elles ainsi que les viscosités des deux polymères.

Des poudres Kepstan® 6003 et de Kepstan® 6002 de la société Arkema dont la taille de particule présente un dv50 de 50µm plus ou moins 5µm (notée 6003 PL et 6002 PL) sont soumises à un test rhéologique selon le cycle suivant. Cycle : Tmax=340°C puis Tlit de 265°C (viscosité : triangle plein pour le 6003 PL et carré plein pour le 6002 PL)

Les Kepstan® 6003 PL et 6002 PL sont des produits commerciaux de la société Arkema. Ils correspondent à des PEKK de même structure chimique mais avec 2 masses moléculaires différentes (6003 PL a une masse moléculaire plus faible que le 6002 PL).

Kepstan® 6003 PL : MVI (sous 1kg à 380°C) entre 8 et 16 cm3/10min.

Kepstan® 6002 PL : MVI (sous 5kg à 380°C) entre 24 et 50 cm3/10min.

Les mesures sont effectuées dans un rhéomètre ARES, à une fréquence de sollicitation de 1 rad/s entre des plans parallèles (diamètre 25 mm) et avec une vitesse de refroidissement de 0.5°C/min.

Cette courbe montre que la masse moléculaire a une influence significative sur la viscosité du matériau à la température du lit et aussi sur le temps ouvert.

Cette méthodologie permet donc de démontrer que la température idéale du lit de poudre ne dépendra pas uniquement de la structure chimique du polymère mais aussi de sa masse moléculaire.

## Revendications

1. Procédé de fabrication d'un objet par fusion d'une poudre de polymère dans un dispositif de frittage de poudre sous un faisceau laser comprenant les étapes suivantes :
- Fabrication de l'objet dans un dispositif de frittage de poudre sous un faisceau laser à la température initiale du lit de poudre, **caractérisé en ce que** la dite température initiale du lit de poudre est sélectionnée de la façon suivante :
- Etablissement des comportements de viscosité de la poudre de polymère en fonction du temps et d'un gradient descendant de température à partir d'une température de surfusion, correspondant à la température du lit de poudre, que la couche fusionnée à une température supérieure à la température de fusion (T>Tf) par le laser rejoint rapidement par refroidissement, les mesures de viscosité étant réalisées dans un dispositif rhéométrique plan plan selon une fréquence de sollicitation inférieure à 5rad/s.
- Sélection de la température initiale correspondant à la température du lit de poudre autorisant une viscosité du polymère en surfusion comprise entre 800 et 20000 Pa.s durant une plage de temps supérieure à 5 minutes.

2. Procédé selon la revendication 1 dans lequel le polymère est semi- cristallin.

3. Procédé selon la revendication 1 dans lequel le polymère est une Poly aryle éther cétone.

4. Procédé selon la revendication 3 dans lequel le Poly aryle éther cétone est choisi parmi le PEK, PEEK, PEKK et PEKEKK.

5. Procédé selon la revendication 1 dans lequel le polymère est un polyamide.

6. Procédé selon la revendication 5 dans lequel le polyamide est un polyamide ou copolyamide aliphatique ou aromatique choisi parmi PA 6-6, PA 6, PA 4-6, PA 6-10, PA 6-12, PA 11 ou PA 12.

## Patentansprüche

1. Verfahren zur Herstellung eines Objekts durch Schmelzen eines Polymerpulvers in einer Vorrichtung zum Sintern von Pulvern unter einem Laserstrahl, das die folgenden Schritte umfasst:
- Herstellung des Objekts in einer Vorrichtung zum Sintern von Pulvern unter einem Laserstrahl bei der Anfangstemperatur des Pulverbetts, **dadurch gekennzeichnet, dass** die Anfangstemperatur des Pulverbetts folgendermaßen gewählt wird:
- Ermittlung des Viskositätsverhaltens des Polymerpulvers in Abhängigkeit von der Zeit und einem abnehmenden Temperaturgradienten ausgehend von einer Unterkühlungstemperatur, die der Temperatur des Pulverbetts entspricht, auf die die bei einer über der Schmelztemperatur liegenden Temperatur (T > Tm) durch den Laser geschmolzene Schicht durch Abkühlung schnell zurückkehrt, wobei die Viskositätsmessungen auf einem Platte-Platte-Rheometer einer Belastungsfrequenz von weniger als 5 rad/s durchgeführt werden,
- Wahl der Anfangstemperatur, die der Temperatur des Pulverbetts entspricht, die eine Viskosität des unterkühlten Polymers zwischen 800 und 20.000 Pa.s während eines Zeitbereichs von mehr als 5 Minuten ermöglicht.

2. Verfahren nach Anspruch 1, bei dem das Polymer teilkristallin ist.

3. Verfahren nach Anspruch 1, bei dem es sich bei dem Polymer um ein Polyaryletherketon handelt.

4. Verfahren nach Anspruch 3, bei dem das Polyaryletherketon aus PEK, PEEK, PEKK und PEKEKK ausgewählt wird.

5. Verfahren nach Anspruch 1, bei dem es sich bei dem Polymer um ein Polyamid handelt.

6. Verfahren nach Anspruch 5, bei dem es sich bei dem Polyamid um ein aliphatisches oder aromatisches Polyamid oder Copolyamid handelt, das aus PA-6,6, PA-6, PA-4,6, PA-6,10, PA-6,12, PA-11 oder PA-12 ausgewählt wird.

## Claims

1. Process for manufacturing an object by fusing a polymer powder in a laser-beam powder sintering device comprising the following steps:
- manufacturing the object in a laser-beam powder sintering device at the initial temperature of the powder bed, **characterized in that** said initial temperature of the powder bed is selected in the following manner:
- establishing the viscosity behavior of the polymer powder as a function of the time and of a descending temperature gradient starting from a supercooling temperature, corresponding to the temperature of the powder bed, to which the layer fused at a temperature above the melting temperature (T>Tm) by the laser rapidly returns to via cooling, the viscosity measurements being carried out in a plate-plate rheometer device at a stress frequency of less than 5 rad/s.
- selecting the initial temperature corresponding to the temperature of the powder bed allowing a viscosity of the supercooled polymer of between 800 and 20 000 Pa.s during a time range of more than 5 minutes.

2. Process according to Claim 1, wherein the polymer is semicrystalline.

3. Process according to Claim 1, wherein the polymer is a polyaryletherketone.

4. Process according to Claim 3, wherein the polyaryletherketone is chosen from PEK, PEEK, PEKK and PEKEKK.

5. Process according to Claim 1, wherein the polymer is a polyamide.

6. Process according to Claim 5, wherein the polyamide is an aliphatic or aromatic polymamide or copolymamide chosen from PA 6-6, PA 6, PA 4-6, PA 6-10, PA 6-12, PA 11 or PA 12.
